# EUROPÄISCHE PATENTANMELDUNG

(11) **EP 1 571 436 A1**
(43) Veröffentlichungstag der Anmeldung: **07.09.2005**
(21) Anmeldenummer: 04100834.3
(22) Anmeldetag: 02.03.2004
(51) Int. Cl.: G01M 1/32, F16F 15/32, F04D 29/66

(54) **Verfahren zum Auswuchten eines Lüfterrades**

(71) Anmelder: Ford Global Technologies, LLC, A subsidary of Ford Motor Company, Dearborn, MI 48126 (US)
(72) Erfinder: Aust, Frank, 41542, Dormagen (DE)
(74) Vertreter: Drömer, Hans-Carsten

(57) **Zusammenfassung**

Die Erfindung betrifft ein Verfahren zum Auswuchten eines Lüfterrades (1) mit einem Auswuchtmittel (4). Das Auswuchtmittel (4) ist stoffschlüssig mit dem Lüfterrad (1) verbunden, wobei dem Lüfterrad eine Auftragvorrichtung zugeordnet ist, die das Auswuchtmittel (4) mit einer erforderlichen Stelle verbindet.

## Beschreibung

Die Erfindung betrifft ein Verfahren zum Auswuchten eines Lüfterrades mit einem Auswuchtmittel.

Derartige Verfahren zur Auswuchtung eines Lüfterrades sind bekannt. Insbesondere in der Fahrzeugindustrie werden die Lüfterräder ausgewuchtet, um verschiedenen Anforderungen gerecht zu werden. Dabei wird das Lüfterrad derart ausgewuchtet, daß diesem keine scharfen Kanten hinzugefügt werden, um möglichst wenig Turbulenzen zu erzeugen. Das bekannte Verfahren sieht vor, daß die Lüfterräder mit als Metallclips ausgestalteten Auswuchtmitteln ausgewuchtet werden. Diese werden kraftschlüssig auf das auszuwuchtende Lüfterrad gesteckt.

Als ein Hauptnachteil des bekannten Verfahrens ist anzusehen, daß die Metallclipse lediglich manuell auf das Lüfterrad aufgesteckt werden können.

Der Erfindung liegt die Aufgabe zugrunde, ein verbessertes Verfahren zum Auswuchten eines Lüfterrades zur Verfügung zu stellen, bei dem mit einfachen Mitteln eine kostengünstige und insbesondere automatisierbare Auswuchtung des Lüfterrades erreicht wird.

Erfindungsgemäß wird die Aufgabe dadurch gelöst, daß das Auswuchtmittel stoffschlüssig mit dem Lüfterrad verbunden wird, wobei dem Lüfterrad eine Auftragvorrichtung zugeordnet ist, die das Auswuchtmittel mit der erforderlichen Stelle des Lüfterrades verbindet.

Mit dem erfindungsgemäßen Verfahren wird ein verbessertes Auswuchtverfahren bereitgestellt, mit dem es möglich ist, das Auswuchtmittel automatisiert mit dem Lüfterrad zu verbinden. Das Auswuchtmittel übernimmt die Funktion eines Wuchtgewichtes. Durch den Wegfall einer manuellen Verbindung des Auswuchtmittels mit dem Lüfterrad werden zudem erhebliche Kosten eingespart.

Um zu verhindern, daß sich das Auswuchtmittel bei der Rotation des Lüfterrades im Betrieb von diesem löst, ist zweckmäßig vorgesehen, daß das Auswuchtmittel mit dem Lüfterrad stoffschlüssig verklebt wird.

Günstig im Sinne der Erfindung ist, wenn das Auswuchtmittel ein Kunststoff, vorzugsweise ein klebender Kunststoff ist. Zweckmäßig ist, wenn der Kunststoff zudem ein vorzugsweise schnell aushärtender Kunststoff ist. Der Kunststoff wird vorzugsweise derart gewählt, daß dieser insbesondere spritzbar auf das Lüfterrad auftragbar ist.

Möglich im Sinne der Erfindung ist aber auch, daß das Auswuchtmittel eine selbstklebende Folie ist, die zumindest auf ihrer Verbindungsseite mit dem Lüfterrad eine Klebeschicht aufweist.

Zur Auftragung des Auswuchtmittels ist vorteilhaft die Auftragvorrichtung vorgesehen. Diese trägt das Auswuchtmittel automatisiert auf die erforderlichen Stellen bzw. die erforderliche Stelle des Lüfterrades auf. Die erforderlichen Stellen bzw. die erforderliche Stelle wird mittels bekannter Wuchtvorrichtungen ermittelt. Die Auftragvorrichtung kann mit der Wuchtvorrichtung gekoppelt sein, so daß ein automatisiertes Messen und Auftragen möglich ist.

Mittels der Auftragvorrichtung ist das Auswuchtmittel besonders flach auf das Lüfterrad auftragbar. Durch die besonders flache Auftragung werden störende Erhebungen ausgeschlossen, so daß die Strömung an Flügeln des Lüfterrades minimal beeinflußt wird. Turbulenzen werden somit weitgehend vermieden. Dieser Effekt wird selbstverständlich auch erreicht, wenn das Auswuchtmittel als Folie ausgestaltet ist.

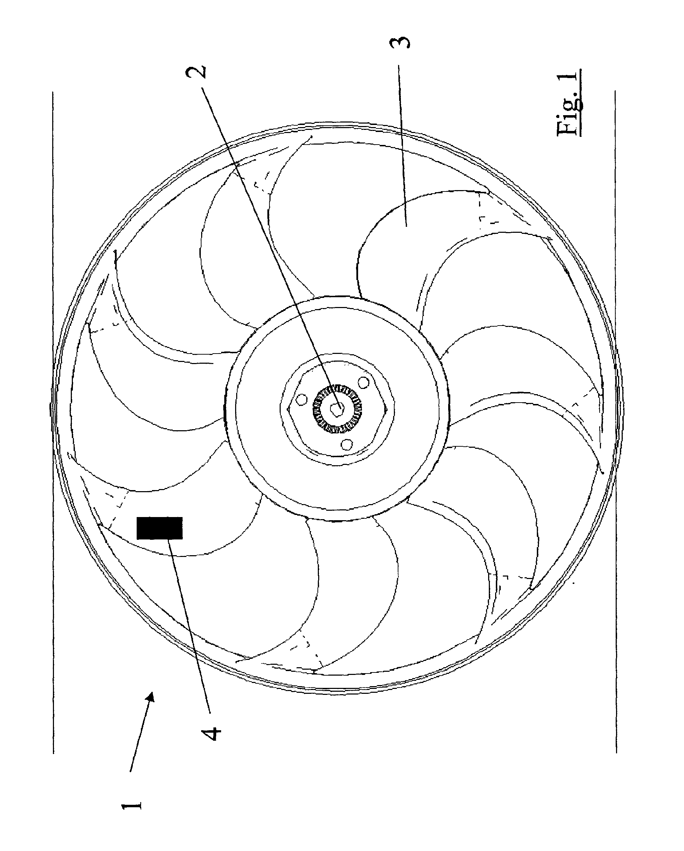

Weitere vorteilhafte Ausgestaltungen der Erfindung sind in den Unteransprüchen und der folgenden Figurenbeschreibung offenbart. Es zeigt die einzige
- Fig. 1: ein Lüfterrad in einer Frontansicht.

Figur 1 zeigt ein Lüfterrad 1. Das Lüfterrad 1 ist Bestandteil eines Kraftfahrzeugs, und vorzugsweise einem Kühler zugeordnet. Das Lüfterrad 1 weist eine Drehachse 2 und konzentrisch um diese angeordnete Flügel 3 auf. Das Lüfterrad 1 ist ein herkömmlich ausgestaltetes Lüfterrad.

Um beispielsweise einen möglichst ruhigen Lauf des Lüfterrades 1 im Betriebszustand zu erreichen, ist das Lüfterrad 1 mittels Auswuchtmitteln 4 ausgewuchtet. Das Auswuchtmittel 4 ist in dem dargestellten Ausführungsbeispiel mit einem der Flügel 3 verbunden. In der bevorzugten Ausgestaltung ist das Auswuchtmittel 4 als klebender, aushärtender Kunststoff ausgestaltet. Selbstverständlich kann das Auswuchtmittel 4 aber auch als Folie ausgestaltet sein, welche zumindest an ihrer Verbindungsseite mit dem Flügel 3 eine Klebeschicht aufweist.

Zum Auswuchten des Lüfterrades 1 wird dieses von einer üblichen Wuchtvorrichtung ausgemessen. Die Wuchtvorrichtung stellt eine Unwucht des Lüfterrades 1 fest und berechnet eine oder mehrere erforderliche Stellen zur Auftragung des Auswuchtmittels 4.

Hierzu ist vorteilhaft vorgesehen, daß das Auswuchtmittel 4 automatisiert mittels einer Auftragvorrichtung auf das Lüfterrad 1 bzw. dessen Flügel 3 aufgetragen wird. Das Auswuchtmittel 4 wird derart aufgetragen, daß an der berechnen, erforderlichen Stelle das notwendige Gewicht zur Auswuchtung mit dem Lüfterrad 1 bzw. dem Flügel 3 verbunden wird. Das Auswuchtmittel 4 wird hierbei möglichst flach aufgetragen, um die Strömung an den Flügeln 3 nur minimal zu beeinflussen. Vorteilhaft werden dadurch störende Turbulenzen vermieden.

Ist das Auswuchtmittel 4 als klebender, aushärtender Kunststoff ausgestaltet, ist die Auftragvorrichtung als Spritzvorrichtung ausgestaltet. Für den Fall, daß eine selbstklebende Folie verwendet wird, ist die Auftragvorrichtung entsprechend ausgestaltet.

Die Auftragvorrichtung ist vorzugsweise mit der Wuchtvorrichtung gekoppelt, so daß ein automatisches Bestimmen der erforderlichen Stellen zur Behebung einer Unwucht und ein automatisches Auftragen des Auswuchtmittels 4 möglich ist.

Denkbar ist, daß nicht nur Lüfterräder sondem alle auswuchtbaren Drehelemente mit dem erfindungsgemäßen Verfahren auswuchtbar sind.

## Patentansprüche

1. Verfahren zum Auswuchten eines Lüfterrades (1) mit einem Auswuchtmittel (4),
**dadurch gekennzeichnet, daß**
das Auswuchtmittel (4) stoffschlüssig mit dem Lüfterrad (1) verbunden ist, wobei dem Lüfterrad eine Auftragvorrichtung zugeordnet ist, die das Auswuchtmittel (4) mit einer erforderlichen Stelle verbindet.

2. Verfahren nach Anspruch 1,
**dadurch gekennzeichnet, daß**
das Auswuchtmittel (4) stoffschlüssig mit dem Lüfterrad (1) verklebt ist.

3. Verfahren nach Anspruch 1 oder 2,
**dadurch gekennzeichnet, daß**
das Auswuchtmittel (4) ein klebender Kunststoff ist.

4. Verfahren nach einem der vorhergehenden Ansprüche,
**dadurch gekennzeichnet, daß**
das Auswuchtmittel (4) ein klebender, aushärtender Kunststoff ist.

5. Verfahren nach einem der vorhergehenden Ansprüche,
**dadurch gekennzeichnet, daß**
das Auswuchtmittel (4) mittels der Auftragvorrichtung auf das Lüfterrad (1) gespritzt wird.

6. Verfahren nach einem der Ansprüche 1 bis 3,
**dadurch gekennzeichnet, daß**
das Auswuchtmittel (4) eine Folie ist, die zumindest an ihrer Verbindungsseite mit dem Lüfterrad (1) eine Klebschicht zur stoffschlüssigen Verbindung aufweist.
